# FASCICULE DE BREVET EUROPEEN

(11) **EP 3 856 555 B1**
(45) Date de publication et mention de la délivrance du brevet: **28.12.2022**
(21) Numéro de dépôt: 19795281.5
(22) Date de dépôt: 26.09.2019
(51) Int. Cl.: B60H 1/00, B60H 1/32

(54) **CIRCUIT DE FLUIDE REFRIGERANT POUR VEHICULE**
KÜHLMITTELKREISLAUF FÜR EIN FAHRZEUG
COOLANT CIRCUIT FOR A VEHICLE

(30) Priorité: 26.09.2018 FR 1858794
(43) Date de publication de la demande: 04.08.2021
(73) Titulaire: VALEO SYSTEMES THERMIQUES, 78320 Le Mesnil Saint-Denis (FR)
(72) Inventeur: YAHIA, Mohamed, 78322 LE MESNIL SAINT-DENIS CEDEX (FR)
(74) Mandataire: Valeo Systèmes Thermiques
(86) Numéro de dépôt international: PCT/FR2019/052276
(87) Numéro de publication internationale: WO 2020/065230

(56) Documents cités:
- EP-A1- 2 796 810
- EP-A1- 3 118 035
- DE-A1-102012 224 484
- US-A1- 2018 111 443

## Description

Le domaine de la présente invention est celui des circuits de fluide réfrigérant pour véhicule, notamment pour véhicule automobile.

Les véhicules automobiles sont couramment équipés d'un circuit de fluide réfrigérant utilisé pour chauffer ou refroidir différentes zones ou différents composants du véhicule. Il est notamment connu d'utiliser ce circuit de fluide réfrigérant pour traiter thermiquement un flux d'air envoyé dans l'habitacle du véhicule équipé d'un tel circuit.

Dans une autre application de ce circuit, il est connu de l'utiliser pour refroidir un élément d'une chaîne de traction électrique du véhicule. Cet élément est notamment un dispositif de stockage électrique utilisé pour fournir une énergie à un moteur électrique capable de mettre en mouvement ledit véhicule. Le circuit de fluide réfrigérant fournit ainsi l'énergie capable de refroidir le dispositif de stockage électrique pendant son utilisation en phases de roulage. Le circuit de fluide réfrigérant est ainsi dimensionné pour refroidir ce dispositif de stockage électrique pour des températures qui restent modérées.

Le document EP 2 796 810 A1 divulgue un exemple connu de circuit de fluide réfrigérant d'un véhicule. Il est également connu de charger le dispositif de stockage électrique du véhicule en le raccordant pendant plusieurs heures au réseau électrique domestique. Cette technique de charge longue permet de maintenir la température du dispositif de stockage électrique en dessous d'un certain seuil, ce qui permet de se passer de tout système de refroidissement du dispositif de stockage électrique.

Une nouvelle technique de charge rapide a fait son apparition récemment. Elle consiste à charger le dispositif de stockage électrique sous une tension et un ampérage élevés, de manière à charger le dispositif de stockage électrique en un temps court de quelques minutes. Cette charge rapide génère un échauffement du dispositif de stockage électrique qu'il convient de refroidir. Cet échauffement impose le dimensionnement des composants car il s'agit de la situation la plus sévère. Ce dimensionnement génère un impact fort lors du fonctionnement usuel hors charge rapide et notamment par la surchauffe générée en aval du refroidisseur du stockage électrique.

Le problème technique réside donc dans la capacité d'une part à dissiper les calories générées par l'élément de la chaîne de traction électrique du véhicule, d'autre part à refroidir l'habitacle, tant en conservant un niveau de performance du circuit considéré comme acceptable.

L'invention s'inscrit dans ce contexte et propose une solution technique qui concoure à l'atteinte de cet objectif, c'est-à-dire maintenir le dispositif de stockage électrique en-dessous d'une température seuil et/ou refroidir l'habitacle du véhicule à un niveau de performances déterminé, au moyen d'un circuit de fluide réfrigérant astucieusement conçu pour fonctionner avec deux échangeurs thermiques dédiés au refroidissement d'un composant de la chaîne de traction électrique du véhicule, et un troisième échangeur thermique dédié au refroidissement de l'habitacle, en permettant de manière simple et économique d'avoir une surchauffe en entrée du dispositif de compression.

L'invention a donc pour objet un circuit de fluide réfrigérant d'un véhicule, le circuit comprenant au moins une conduite principale, une première branche, une deuxième branche et une troisième branche toutes trois en série de la conduite principale, la conduite principale comprenant au moins un dispositif de compression du fluide réfrigérant et un échangeur thermique principal agencé pour être traversé par un flux d'air extérieur à un habitacle du véhicule, la première branche comprenant au moins un premier échangeur thermique couplé thermiquement à une boucle de liquide caloporteur et un dispositif d'accumulation du fluide réfrigérant, la deuxième branche comprenant au moins un deuxième échangeur thermique couplé thermiquement à la boucle de liquide caloporteur, la troisième branche comprenant au moins un troisième échangeur thermique agencé pour être traversé par un flux d'air intérieur envoyé dans l'habitacle du véhicule, caractérisé en ce que la première branche et la deuxième branche sont en parallèle et se joignent en un point de convergence disposé entre le dispositif d'accumulation et le dispositif de compression, et en ce que la première branche et la troisième branche se joignent en un premier point de jonction disposé entre le premier échangeur thermique et le dispositif d'accumulation. Le premier échangeur thermique et le troisième échangeur thermique sont destinés à alimenter en fluide réfrigérant le dispositif d'accumulation, tandis que le deuxième échangeur thermique est raccordé de sorte à contourner le dispositif d'accumulation. Le deuxième échangeur thermique est en effet raccordé en aval du dispositif d'accumulation, du point de vue du fluide réfrigérant. Le deuxième échangeur thermique est apte à générer une surchauffe du fluide réfrigérant. Ce fluide réfrigérant est sous forme gazeuse lorsque qu'il est surchauffé. Le fluide réfrigérant à l'état gazeux issu du deuxième échangeur thermique rejoint alors directement le dispositif de compression, ce qui contribue à élever le coefficient de performance du circuit. Par « directement » on entend qu'il n'y a pas de bouteille ou de dispositif d'accumulation entre le deuxième échangeur thermique et le dispositif de compression.

Lorsque le premier échangeur thermique et le deuxième échangeur thermique fonctionnent conjointement, le fluide réfrigérant proche de l'état saturant vapeur (titre vapeur proche de 0.95, notamment) issu du dispositif d'accumulation et le fluide réfrigérant gazeux surchauffé issu directement du deuxième échangeur thermique convergent dans la conduite principale au point de convergence. Ce fluide réfrigérant est alors mélangé et il est modérément surchauffé. Cette surchauffe améliore globalement le coefficient de performance du circuit.

Le fait que le premier échangeur thermique soit raccordé en amont du dispositif d'accumulation du point de vue du fluide réfrigérant et que le deuxième échangeur thermique soit raccordé en aval du dispositif d'accumulation permet de découpler le fonctionnement de ce dernier avec le troisième échangeur thermique comme par exemple lors de la phase de roulage sur l'autoroute avec un refroidissement modéré du dispositif de stockage électrique très inférieur à la possibilité de refroidissement maximal lors de la charge rapide. En l'absence d'un tel montage, le circuit pourrait être opéré de manière à noyer le premier échangeur thermique pour compenser la surchauffe du deuxième échangeur thermique, ce qui complique le dispositif de contrôle et l'optimisation.

Le premier échangeur thermique est configuré pour traiter thermiquement au moins un élément d'une chaîne de traction électrique du véhicule, tel un dispositif de stockage électrique utilisé pour fournir une énergie à un moteur électrique capable de mettre en mouvement ledit véhicule, et/ou une unité électronique et/ou le moteur électrique, en tant que tel. Le premier échangeur thermique fonctionne ainsi en évaporateur.

Le deuxième échangeur thermique est configuré pour traiter thermiquement au moins un élément de la chaîne de traction électrique du véhicule, tel un dispositif de stockage électrique utilisé pour fournir une énergie à un moteur électrique capable de mettre en mouvement ledit véhicule, et/ou une unité électronique et/ou le moteur électrique. Le deuxième échangeur thermique fonctionne en évaporateur.

Avantageusement, le premier échangeur thermique et le deuxième échangeur thermique sont affectés au traitement thermique d'un même composant de la chaîne de traction électrique, par exemple le dispositif de stockage électrique.

Le premier échangeur thermique et le deuxième échangeur thermique permettent l'un et l'autre un échange de calories entre le fluide réfrigérant et l'élément de la chaîne de traction électrique du véhicule, soit directement, c'est-à-dire par convection entre le premier échangeur thermique et l'élément de la chaîne de traction électrique du véhicule, et/ou le deuxième échangeur thermique et l'élément de la chaîne de traction électrique du véhicule. Dans un tel cas, le refroidissement de l'élément de la chaîne de traction électrique du véhicule est direct. Alternativement, l'échange de calories peut être réalisé indirectement via la boucle de liquide caloporteur, cette dernière étant destinée à transporter les calories de l'élément de la chaîne de traction électrique du véhicule vers le premier échangeur thermique et/ou le deuxième échangeur thermique. On comprend donc que le refroidissement de l'élément de la chaîne de traction électrique du véhicule peut être indirect.

Le premier échangeur thermique et le deuxième échangeur thermique sont chacun individualisé, en ce sens qu'ils peuvent être positionnés dans le véhicule à des places distinctes, en étant physiquement distants l'un de l'autre.

Le troisième échangeur thermique peut être installé dans une installation de ventilation, de chauffage, et/ou de climatisation. Ce troisième échangeur thermique peut ainsi être utilisé comme évaporateur afin de refroidir le flux d'air envoyé dans l'habitacle du véhicule.

Le premier point de jonction est un point de convergence du circuit. Le fluide réfrigérant en provenance du premier échangeur thermique et du troisième échangeur thermique peut converger au premier point de jonction.

Le dispositif de compression est par exemple un compresseur, et l'invention trouve une application toute particulière lorsque le compresseur est un compresseur électrique à cylindrée fixe et à vitesse variable. Il est ainsi possible de contrôler la puissance thermique du circuit selon l'invention.

L'échangeur thermique principal peut être utilisé en condenseur. Il est disposé en face avant du véhicule pour bénéficier d'un apport en flux d'air extérieur lors de la phase de roulage. L'échangeur thermique principal peut être utilisé en évaporateur quand le circuit est apte à fonctionner en pompe à chaleur.

Le fluide réfrigérant est par exemple un fluide sous-critique, tel que celui connu sous la référence R134A ou R1234YF. Le circuit de fluide réfrigérant selon l'invention est un circuit fermé qui met en œuvre un cycle thermodynamique.

La première branche et la deuxième branche du circuit sont parallèles du point de vue du fluide réfrigérant. La première branche et la deuxième branche sont chacune en série de la conduite principale du point de vue du fluide réfrigérant.

Selon un aspect de l'invention, la conduite principale s'étend entre le point de convergence et un point de divergence, le point de divergence étant un point à partir duquel la première branche et la deuxième branche se séparent.

Selon un aspect de l'invention, la conduite principale comprend une unité de sous-refroidissement disposée entre l'échangeur thermique principal et le point de divergence. L'échangeur thermique principal est associé à l'unité de sous-refroidissement du fluide réfrigérant. L'unité de sous-refroidissement permet de générer un sous-refroidissement du fluide réfrigérant, c'est-à-dire un abaissement de la température du fluide réfrigérant en dessous de sa température de condensation.

Selon un aspect de l'invention, l'unité de sous-refroidissement est un quatrième échangeur thermique, agencé pour être traversé par le flux d'air extérieur à l'habitacle du véhicule, et installé pour être traversé par le flux d'air extérieur avant que ce dernier ne traverse l'échangeur thermique principal. L'unité de sous-refroidissement peut ainsi être disposée conjointement avec l'échangeur thermique principal en face avant du véhicule pour bénéficier de l'apport en flux d'air extérieur lors des phases de roulage. Le flux d'air extérieur traverse dans un premier temps l'unité de sous-refroidissement. Puis, sortant de l'unité de sous-refroidissement, le flux d'air extérieur traverse l'échangeur thermique principal.

Lorsque l'unité de sous-refroidissement et l'échangeur thermique principal sont tous deux exploités pour refroidir le fluide réfrigérant, le flux d'air extérieur réalise un premier échange thermique avec l'unité de sous-refroidissement puis un deuxième échange thermique avec l'échangeur thermique principal, dans cet ordre.

Selon un aspect de l'invention, la première branche comprend le premier point de jonction et la deuxième branche comporte un deuxième point de jonction, la troisième branche du circuit s'étendant entre le premier point de jonction et le deuxième point de jonction.

Le deuxième point de jonction est un point de divergence du circuit. Le fluide réfrigérant en provenance de la conduite principale peut se diviser au deuxième point de jonction pour alimenter le deuxième échangeur thermique et le troisième échangeur thermique.

La troisième branche est parallèle à au moins une première partie de la première branche, la première partie de la première branche comprenant au moins le premier échangeur thermique et une deuxième partie de la première branche comprenant au moins le dispositif d'accumulation.

Selon un aspect de l'invention, la conduite principale comprend un organe de détente principal. L'organe de détente principal est en amont de l'échangeur thermique principal du point de vue du fluide réfrigérant. Lorsque l'échangeur thermique principal fonctionne en condenseur, l'organe de détente principal est inopérant. Il est alors totalement ouvert. Lorsque l'échangeur thermique principal fonctionne en évaporateur, l'organe de détente principal opère une détente du fluide réfrigérant.

Selon un aspect de l'invention, la première branche comprend un premier organe de détente. Le premier organe de détente est en amont du premier échangeur thermique du point de vue du fluide réfrigérant.

Selon un aspect de l'invention, la deuxième branche comprend un deuxième organe de détente. Le deuxième organe de détente est en amont du deuxième échangeur thermique du point de vue du fluide réfrigérant.

Selon un aspect de l'invention, la troisième branche comprend un troisième organe de détente. Le troisième organe de détente est en amont du troisième échangeur thermique du point de vue du fluide réfrigérant.

L'organe de détente principal, le premier organe de détente, le deuxième organe de détente et/ou le troisième organe de détente sont par exemple des détendeurs électroniques. Ils peuvent être équipés d'une fonction d'arrêt. Lorsque la fonction d'arrêt n'équipe pas l'un et/ou l'autre des organes de détente, la fonction d'arrêt est déportée en amont dudit organe de détente considéré et réalisée par un composant dédié.

L'un et/ou l'autre de ces organes de détente peuvent être totalement ouverts ou partiellement ouverts. Lorsqu'ouvert ils ne modifient pas l'état du fluide réfrigérant les traversant : ils sont qualifiés d'inopérant et sont totalement ouverts. Lorsqu'ils sont fermés, ils interdisent le passage du fluide réfrigérant. Lorsqu'ils sont partiellement ouverts, ils réalisent une détente du fluide réfrigérant, agissant ainsi sur la puissance frigorifique fournie par l'échangeur thermique concerné.

Selon un aspect de l'invention, le dispositif d'accumulation est disposé entre le premier point de jonction et le point de convergence. Ainsi, le dispositif d'accumulation peut être alimenté par le premier échangeur thermique et/ou par le troisième échangeur thermique et/ou par l'échangeur thermique principal.

Selon un aspect de l'invention, la conduite principale comprend un cinquième échangeur thermique disposé entre le dispositif de compression et l'échangeur thermique principal, le cinquième échangeur thermique étant agencé pour être traversé par le flux d'air intérieur envoyé dans l'habitacle du véhicule. Ce cinquième échangeur thermique peut être installé dans l'installation de ventilation, de chauffage, et/ou de climatisation. Ce cinquième échangeur thermique est utilisé comme condenseur afin de chauffer le flux d'air envoyé dans l'habitacle du véhicule. Le cinquième échangeur thermique peut être ainsi disposé conjointement avec le troisième échangeur thermique, dans l'installation de ventilation, de chauffage, et/ou de climatisation. En présence du cinquième échangeur thermique fonctionnant en condenseur, l'échangeur thermique principal est apte à fonctionner en évaporateur, dans le mode pompe à chaleur.

Selon un aspect de l'invention, la conduite principale comporte un troisième point de jonction disposé entre l'échangeur thermique principal et le point de divergence, une quatrième branche s'étendant entre le troisième point de jonction et le premier point de jonction, la quatrième branche comprenant au moins une vanne d'arrêt. Le troisième point de jonction est un point de divergence du circuit. La vanne d'arrêt peut être soit ouverte soit fermée, autorisant ou non la circulation du fluide réfrigérant dans la quatrième branche. Le premier point de jonction est un point de convergence du fluide réfrigérant en provenance de la quatrième branche, du premier échangeur thermique et du troisième échangeur thermique.

Selon un aspect de l'invention, le troisième point de jonction est disposé entre l'échangeur thermique principal et l'unité de sous-refroidissement. Le fluide réfrigérant en provenance de l'échangeur thermique principal peut se diviser au troisième point de jonction pour alimenter la quatrième branche, et donc le premier point de jonction et le dispositif d'accumulation et l'unité de sous-refroidissement.

Selon un aspect de l'invention, le circuit comprend une cinquième branche qui raccorde la conduite principale au point de divergence, la cinquième branche comprenant au moins une valve d'arrêt. La valve d'arrêt peut être soit ouverte soit fermée, autorisant ou non la circulation du fluide réfrigérant dans la cinquième branche.

La cinquième branche s'étend entre le point de divergence et un quatrième point de jonction disposé dans la conduite principale entre le cinquième échangeur thermique et l'échangeur thermique principal. Avantageusement, le quatrième point de jonction est disposé entre le cinquième échangeur thermique et l'organe de détente principal. Ainsi, lorsque l'organe de détente principal est fermé, le fluide réfrigérant emprunte la cinquième branche pour rejoindre le point de divergence du circuit.

Selon un aspect de l'invention, le premier échangeur thermique est configuré pour produire une puissance thermique supérieure à celle du deuxième échangeur thermique. Le premier échangeur thermique et le deuxième échangeur thermique ont des performances thermiques différentes. Cette différence peut venir du fait que le premier échangeur thermique et le deuxième échangeur thermique sont des modèles différents, par exemple en taille, en forme et/ou conçus selon des technologies et/ou avec des matériaux leur conférant des performances thermiques distinctes. Par exemple, le premier échangeur thermique est configuré pour un débit de fluide réfrigérant plus important. Selon un autre exemple où ces échangeurs thermiques sont des échangeurs à plaques identiques, le premier échangeur thermique comporte un plus grand nombre de plaques que le deuxième échangeur thermique.

Le premier échangeur thermique et/ou le deuxième échangeur thermique sont exploités en fonction de la demande en refroidissement de l'élément de la chaîne de traction électrique refroidi par la boucle de liquide caloporteur. En phase de roulage, la demande en refroidissement est faible et c'est le deuxième échangeur thermique qui est alors exploité. En phase de charge rapide, c'est le premier échangeur thermique qui fournit une grande partie de la puissance requise. Le deuxième échangeur thermique vient en appui et permet un point de fonctionnement surchauffé à l'entrée du dispositif de compression d'où alors une amélioration du cycle de fonctionnement.

Selon un aspect de l'invention, le circuit comprend un échangeur de chaleur interne à deux passes, une passe basse pression étant disposée dans la conduite principale entre le point de convergence et le dispositif de compression et une passe haute pression étant disposée dans la conduite principale, entre l'unité de sous-refroidissement et le point de divergence.

Selon un aspect alternatif de l'invention, le circuit comprend un échangeur de chaleur interne à deux passes, la passe basse pression étant disposée entre le dispositif d'accumulation et le point de convergence et une passe haute pression étant disposée dans la conduite principale, entre l'unité de sous-refroidissement et le point de divergence.

L'invention concerne également un système de traitement thermique d'un véhicule comprenant le circuit de fluide réfrigérant tel que précédemment décrit et une boucle de liquide caloporteur couplée thermiquement au circuit de fluide réfrigérant par l'intermédiaire du premier échangeur thermique et du deuxième échangeur thermique, le premier échangeur thermique et le deuxième échangeur thermique étant affectés au traitement thermique d'au moins un même élément d'une chaîne de traction électrique du véhicule.

La boucle de liquide caloporteur est un circuit fermé qui comprend au moins un conduit principal, le premier échangeur thermique et le deuxième échangeur thermique et un moyen de mise en circulation, tel qu'une pompe, apte à permettre la circulation du liquide caloporteur dans le conduit principal.

Le premier échangeur thermique et le deuxième échangeur thermique font ainsi partie du circuit de fluide réfrigérant et de la boucle de liquide caloporteur. Il s'agit d'échangeurs thermiques bi-fluide, notamment bi-liquide, configurés pour être parcouru par le fluide réfrigérant et par le liquide caloporteur. Au sein du premier échangeur thermique d'une part et du deuxième échangeur thermique d'autre part, a lieu un transfert de calories entre le fluide réfrigérant et le liquide caloporteur : le liquide caloporteur est refroidi lorsque le premier échangeur thermique et/ou le deuxième échangeur thermique fonctionnent en évaporateur.

L'élément de la chaîne de traction électrique du véhicule est par exemple un dispositif de stockage électrique du véhicule comme une batterie électrique ou un pack-batterie. L'élément de la chaîne de traction électrique peut également correspondre à un moteur électrique de traction du véhicule, une unité de contrôle électronique du moteur électrique de traction. Ledit élément peut, en d'autres termes, correspondre à toute partie de la chaîne de traction électrique du véhicule qui nécessite d'être refroidie. Le traitement thermique peut par ailleurs viser plusieurs de ces éléments.

D'autres caractéristiques, détails et avantages de l'invention ressortiront plus clairement à la lecture de la description donnée ci-après à titre indicatif en relation avec des dessins dans lesquels :
- la figure 1 est une vue schématique du circuit selon l'invention, dans un premier mode de réalisation,
- les figures 2 à 6 montrent le circuit objet du premier mode de réalisation exploité selon différents modes de fonctionnement consistant à refroidir un habitacle du véhicule et/ou un élément d'une chaîne de traction électrique du véhicule,
- la figure 7 est une vue schématique du circuit selon l'invention, dans un deuxième mode de réalisation.

Il faut tout d'abord noter que les figures exposent l'invention de manière détaillée pour mettre en œuvre l'invention, lesdites figures pouvant bien entendu servir à mieux définir l'invention, le cas échéant. Ces figures sont des représentations schématiques qui illustrent comment est réalisé le circuit, ce qui le compose et comment le fluide réfrigérant circule en son sein. En particulier, le circuit selon l'invention comprend principalement un dispositif de compression du fluide réfrigérant, deux échangeurs thermiques couplés à une boucle de liquide caloporteur, deux échangeurs thermiques sur air, un dispositif d'accumulation, au moins trois organes de détentes et des canalisations reliant chacun de ces composants.

Les termes amont et aval employés dans la description qui suit se réfèrent au sens de circulation du fluide considéré, c'est-à-dire le fluide réfrigérant, un flux d'air intérieur envoyé vers un habitacle du véhicule ou un flux d'air extérieur à l'habitacle du véhicule.

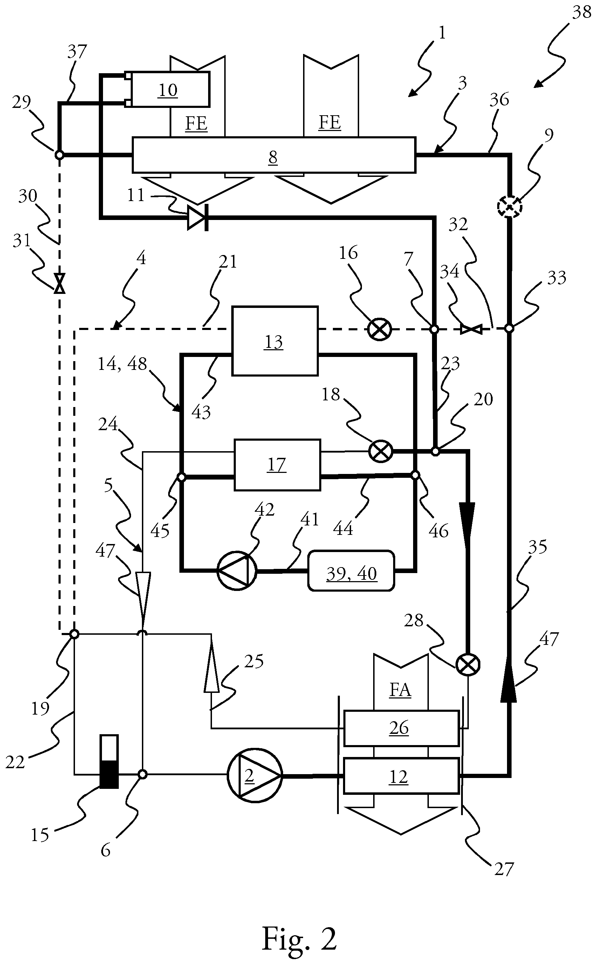

Dans les figures 2 à 6, le fluide réfrigérant est symbolisé par une flèche qui illustre le sens de circulation de ce dernier dans la canalisation considérée. Les traits pleins illustrent une portion de circuit où le fluide réfrigérant circule, tandis que les traits pointillés montrent une absence de circulation du fluide réfrigérant. Le fluide réfrigérant à haute pression et haute température est représenté par des flèches pleines. Le fluide réfrigérant à basse pression et basse température est représenté par des flèches évidées.

Les dénominations « principal », « premier/ère », « deuxième », etc... n'ont pas vocation à indiquer un niveau de hiérarchisation ou ordonnancer les termes qu'elles accompagnent. Ces dénominations permettent de distinguer les termes qu'elles accompagnent et peuvent être interverties sans que soit réduire la portée de l'invention.

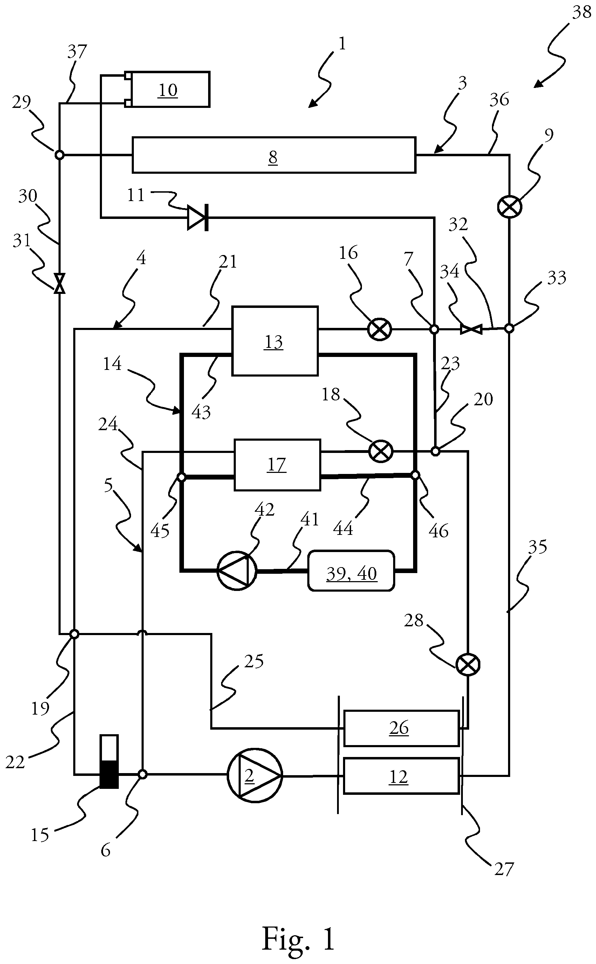

La figure 1 montre ainsi un circuit 1 selon un premier mode de réalisation. Ce circuit 1 est une boucle fermée où un fluide réfrigérant est mis en circulation par un dispositif de compression 2. On notera que le dispositif de compression 2 peut prendre la forme d'un compresseur électrique, c'est-à-dire un compresseur qui comprend un mécanisme de compression, un moteur électrique et éventuellement un contrôleur.

Selon le premier mode de réalisation illustré, le circuit 1 comprend au moins une conduite principale 3, une première branche 4 et une deuxième branche 5. La première branche 4 et la deuxième branche 5 sont toutes deux en série de la conduite principale 3. La première branche 4 et la deuxième branche 5 sont en parallèle et se joignent en un point de convergence 6. La conduite principale 3 s'étend entre le point de convergence 6 et un point de divergence 7, le point de divergence 7 étant le point à partir duquel la première branche 4 et la deuxième branche 5 se séparent.

La conduite principale 3 comprend au moins le dispositif de compression 2 du fluide réfrigérant et un échangeur thermique principal 8. L'échangeur thermique principal 8 est agencé pour être traversé par un flux d'air extérieur à un habitacle d'un véhicule. Ainsi, l'échangeur thermique principal 8 est disposé en face avant du véhicule pour être alimenté par ce flux d'air extérieur. L'échangeur thermique principal 8 est apte à fonctionner en condenseur.

La conduite principale 3 comprend un organe de détente principal 9. Il est disposé en amont de l'échangeur thermique principal 8, du point de vue du fluide réfrigérant. Ainsi associé à l'organe de détente principal 9, l'échangeur thermique principal 8 est apte à fonctionner en évaporateur. L'organe de détente principal 9 peut être totalement ouvert ou partiellement ouvert ou fermé, une fonction d'arrêt y étant intégrée.

La conduite principale 3 comprend une unité de sous-refroidissement 10 disposée entre l'échangeur thermique principal 8 et le point de divergence 7. L'unité de sous-refroidissement 10 est un quatrième échangeur thermique. L'unité de sous-refroidissement 10 est disposée en face avant du véhicule pour être alimenté par le flux d'air extérieur. On retrouve donc conjointement à l'avant du véhicule l'échangeur thermique principal 8 et l'unité de sous-refroidissement 10. L'unité de sous-refroidissement 10 est installée pour être traversé par le flux d'air extérieur avant que ce dernier ne traverse l'échangeur thermique principal 8. Du point de vue du flux d'air extérieur, le quatrième échangeur thermique est en amont de l'échangeur thermique principal 8

La conduite principale 3 comporte un clapet anti-retour 11. Le clapet anti-retour 11 est disposé entre l'unité de sous-refroidissement 10 et le point de divergence 7. Le clapet anti-retour 11 empêche le fluide réfrigérant de circuler depuis le point de divergence 7 vers l'unité de sous-refroidissement 10.

La conduite principale 3 comprend un cinquième échangeur thermique 12, disposé entre le dispositif de compression 2 et l'échangeur thermique principal 8. Dans cet exemple, le cinquième échangeur thermique 12 est disposé entre le dispositif de compression 2 et l'organe de détente principal 9. Le cinquième échangeur thermique 12 et agencé pour être traversé par un flux d'air intérieur envoyé dans l'habitacle du véhicule. Il est configuré pour fonctionner en condenseur dans une installation de ventilation, de chauffage, et/ou de climatisation.

**L**a première branche 4 compren**d** au moins un premier échangeur thermique 13, couplé thermiquement à une boucle 14 de liquide caloporteur, et un dispositif d'accumulation 15 du fluide réfrigérant.

Le premier échangeur thermique 13 est configuré pour fonctionner en évaporateur. Le premier échangeur thermique 13 est associé à un premier organe de détente 16 disposé en amont du premier échangeur thermique 13. Le premier organe de détente 16 peut être totalement ouvert ou partiellement ouvert ou fermé, une fonction d'arrêt y étant intégrée.

Le dispositif d'accumulation 15 est en amont du point de convergence 6 du point de vue du fluide réfrigérant. Le dispositif d'accumulation 15 permet de séparer une phase liquide d'une phase gazeuse du fluide réfrigérant, et d'accumuler la phase liquide du fluide réfrigérant. Le circuit 1 est, de ce fait, dépourvu de bouteille déshydratante.

La deuxième branche 5 comprend au moins un deuxième échangeur thermique 17 couplé thermiquement à la boucle 14 de liquide caloporteur. Le deuxième échangeur thermique 17 est configuré pour fonctionner en évaporateur. Le deuxième échangeur thermique 17 est associé à un deuxième organe de détente 18 disposé en amont du deuxième échangeur thermique 17. Le deuxième organe de détente 18 peut être totalement ouvert ou partiellement ouvert ou fermé, une fonction d'arrêt y étant intégrée.

Les conditions d'utilisation de la boucle 14 de liquide caloporteur peuvent générer une surchauffe du fluide réfrigérant au sein du deuxième échangeur thermique 17. Cette surchauffe correspond à une élévation de la température du fluide réfrigérant au-dessus de sa température de saturation à la même pression.

Le point de convergence 6 est disposé entre le dispositif d'accumulation 15 et le dispositif de compression 2. Ainsi, le dispositif d'accumulation 15 est apte à être alimenté en fluide réfrigérant par le premier échangeur thermique 13, et non le deuxième échangeur thermique 17.

Le premier échangeur thermique 13 est configuré pour produire une puissance thermique supérieure à celle du deuxième échangeur thermique 17. Par exemple, le premier échangeur thermique 13 est de dimensions supérieures par rapport au deuxième échangeur thermique 17.

La première branche 4 comprend un premier point de jonction 19 et la deuxième branche 5 comporte un deuxième point de jonction 20, une troisième branche 25 du circuit 1 s'étendant entre le premier point de jonction 19 et le deuxième point de jonction 20.

La première branche 4 se divise en une première partie 21 et une deuxième partie 22. La première partie 21 s'étend du point de divergence 7 au premier point de jonction 19. La deuxième partie 22 s'étend du premier point de jonction 19 au point de convergence 6. Le premier organe de détente 16 et le premier échangeur thermique 13 sont compris dans la première partie 21 de la première branche 4. Le dispositif d'accumulation 15 est quant à lui compris dans la deuxième partie 22 de la première branche 4.

La deuxième branche 5 se divise en un premier segment 23 et un deuxième segment 24. Le premier segment 23 s'étend entre le point de divergence 7 et le deuxième point de jonction 20. Le deuxième segment 24 s'étend entre le deuxième point de jonction 20 et le point de convergence 6. Le deuxième organe de détente 18 et le deuxième échangeur thermique 17 sont compris dans le deuxième segment 24 de la deuxième branche 5.

La troisième branche 25 comprend au moins un troisième échangeur thermique 26 agencé pour être traversé par le flux d'air intérieur envoyé dans l'habitacle du véhicule. Le troisième échangeur thermique 26 est configuré pour fonctionner en évaporateur dans une installation 27 de ventilation, de chauffage, et/ou de climatisation qui équipe le véhicule. Le troisième échangeur thermique 26 est associé à un troisième organe de détente 28 disposé en amont du troisième échangeur thermique 26. Le troisième organe de détente 28 peut être totalement ouvert ou partiellement ouvert ou fermé.

Le troisième échangeur thermique 26 est disposé dans l'installation 27 de de ventilation, de chauffage, et/ou de climatisation conjointement avec le cinquième échangeur thermique 12. Par exemple, le troisième échangeur thermique 26 est disposé en amont du cinquième échangeur thermique 12, du point de vue du flux d'air intérieur.

Le troisième échangeur thermique 26 est apte à alimenter en fluide réfrigérant le dispositif d'accumulation 15, ce dernier étant disposé en aval du troisième échangeur thermique 26, entre le premier point de jonction 19 et le point de convergence 6.

Le circuit est configuré pour que le premier échangeur thermique 13 fonctionne seul. Le deuxième organe de détente 18 et le troisième organe de détente 28 sont alors fermés.

La conduite principale 3 comporte un troisième point de jonction 29 disposé entre l'échangeur thermique principal 8 et le premier point de jonction 19, une quatrième branche 30 s'étendant entre le troisième point de jonction 29 et le premier point de jonction 19. L'échangeur thermique principal 8 est apte à alimenter en fluide réfrigérant le dispositif d'accumulation 15, via la quatrième branche 30.

La quatrième branche 30 comprend au moins une vanne d'arrêt 31. La vanne d'arrêt 31 autorise la circulation du fluide réfrigérant dans la quatrième branche 30 lorsqu'elle est ouverte et l'interdit lorsqu'elle est fermée.

Le circuit 1 comprend une cinquième branche 32 qui raccorde la conduite principale 3 au point de divergence 7.

La cinquième branche 32 s'étend entre un quatrième point de jonction 33 et le point de divergence 7. Le quatrième point de jonction 33 est disposé dans la conduite principale 3 entre le cinquième échangeur thermique 12 et l'échangeur thermique principal 8. Avantageusement, le quatrième point de jonction 33 est disposé entre le cinquième échangeur thermique 12 et l'organe de détente principal 9.

La cinquième branche 32 comprend au moins une valve d'arrêt 34. La valve d'arrêt 34 autorise la circulation du fluide réfrigérant dans la cinquième branche 32 lorsqu'elle est ouverte et l'interdit lorsqu'elle est fermée.

La conduite principale 3 se divise en une première portion 35, une deuxième portion 36 et une troisième portion 37. La première portion 35 s'étend entre le point de convergence 6 et le quatrième point de jonction 33. Le dispositif de compression 2 et le cinquième échangeur thermique 12 sont compris dans la première portion 35 de la conduite principale 3. La deuxième portion 36 s'étend entre le quatrième point de jonction 33 et le troisième point de jonction 29. L'organe de détente principal 9 et l'échangeur thermique principal 8 sont compris dans la deuxième portion 36 de la conduite principale 3. La troisième portion 37 s'étend entre le troisième point de jonction 29 et le point de divergence 7. L'unité de sous-refroidissement 10 et le clapet anti-retour 11 sont compris dans la troisième portion 37 de la conduite principale 3.

Le circuit 1 de fluide réfrigérant est inclus dans un système 38 de traitement thermique du véhicule. Le système 38 de traitement thermique comprend le circuit 1 de fluide réfrigérant et la boucle 14 de liquide caloporteur. La boucle 14 de liquide caloporteur et le circuit 1 de fluide réfrigérant sont couplés thermiquement par l'intermédiaire du premier échangeur thermique 13 et du deuxième échangeur thermique 17.

Le premier échangeur thermique 13 et le deuxième échangeur thermique 17 sont affectés au traitement thermique d'au moins un même élément 39 d'une chaîne de traction électrique du véhicule. Dans l'exemple de la figure 1, le premier échangeur thermique 13 et le deuxième échangeur thermique 17 sont affectés au traitement thermique d'un dispositif de stockage électrique 40 du véhicule.

La boucle 14 de liquide caloporteur est un circuit 1 fermé qui comprend au moins un conduit principal 41, le premier échangeur thermique 13 et le deuxième échangeur thermique 17 et un moyen de mise en circulation 42. Dans l'exemple de la figure 1, la boucle 14 de liquide caloporteur comprend le conduit principal 41, un premier conduit 43 et un deuxième conduit 44 s'étendant entre un premier point de raccordement 45 et un deuxième point de raccordement 46. Le conduit principal 41 est en série du premier conduit 43 et du deuxième conduit 44 du point de vue du liquide caloporteur. Le premier conduit 43 et le deuxième conduit 44 sont parallèles entre eux du même point de vue.

Le conduit principal 41 comprend le dispositif de stockage électrique 40 et le moyen de mise en circulation 42. Le dispositif de stockage électrique 40 est disposé entre le deuxième point de raccordement 46 et le moyen de mise en circulation 42. Le premier conduit 43 comprend le premier échangeur thermique 13. Le deuxième conduit 44 comprend le deuxième échangeur thermique 17.

Le moyen de mise en circulation 42 est apte à permettre la circulation du liquide caloporteur dans le conduit principal 41. Par exemple, le moyen de mise en circulation 42 est une pompe.

Les figures 2 à 6 montrent le circuit 1 selon l'invention dans le mode de réalisation présenté en figure 1. Les figures 2 à 6 correspondent à différentes mises en situation de traitement thermique de l'habitacle et/ou du dispositif de stockage électrique 40 du véhicule. Selon les modes de fonctionnement présentés, les puissances de refroidissement requises varient. Dès lors, l'un et/ou l'autre des échangeurs thermiques ou de le cinquième échangeur thermique 12 sont sollicités.

La figure 2 illustre le circuit 1 selon l'invention exploité en mode climatisation et mettant en œuvre le traitement thermique du dispositif de stockage électrique 40 lors d'une phase de roulage. Ce mode de fonctionnement permet un refroidissement simultané de l'habitacle du véhicule et du dispositif de stockage électrique 40. Le refroidissement de l'habitacle et réalisé par le troisième échangeur thermique 26. Le refroidissement du dispositif de stockage électrique 40 est réalisé seulement par le deuxième échangeur thermique 17.

Dans l'exemple de la figure 2, le dispositif de compression 2 impose dans la conduite principale 3 un fluide réfrigérant 47 à haute pression et à haute température. C'est dans cet état que le fluide réfrigérant 47 traverse le cinquième échangeur thermique 12 rendu inopérant.

Le fluide réfrigérant 47 passe le quatrième point de jonction 33 pour intégrer la deuxième portion 36 de la conduite principale 3, la valve d'arrêt 34, alors fermée, lui interdisant de traverser la cinquième branche 32.

Dans la deuxième portion 36 de la conduite principale 3, le fluide réfrigérant 47 traverse l'organe de détente principal 9 complètement ouvert. Dès lors, il n'y subit pas de détente.

Dans l'exemple de la figure 2, l'échangeur thermique principal 8 fonctionne en condenseur. Il est traversé par le flux d'air extérieur FE dont au moins une portion a traversé au préalable l'unité de sous-refroidissement 10. Le fluide réfrigérant 47 transfère des calories au flux d'air extérieur FE et se condense. Passé l'échangeur thermique principal 8, le fluide réfrigérant 47 traverse le troisième point de jonction 29 et rejoint la troisième portion 37 de la conduite principale 3, la vanne d'arrêt 31 étant fermée. Il subit un sous-refroidissement en traversant l'unité de sous-refroidissement 10 qui est simultanément traversée par le flux d'air extérieur FE.

Puis, le fluide réfrigérant 47 traverse le clapet anti-retour 11 jusqu'au point de divergence 7. Le premier organe de détente 16 étant fermé, le fluide réfrigérant 47 passe dans la deuxième branche 5 et dans la troisième branche 25, le deuxième organe de détente 18 et le troisième organe de détente 28 autorisant son passage en étant partiellement ouverts.

Dans la deuxième branche 5, le fluide réfrigérant 47, qui est à haute pression et à haute température, subit une détente opérée par le deuxième organe de détente 18. Il traverse le deuxième échangeur thermique 17 à basse pression et à basse température. Ce faisant, le fluide réfrigérant 47 réalise un échange thermique avec la boucle 14 de liquide caloporteur 48 au sein du deuxième échangeur thermique 17 de sorte à refroidir le liquide caloporteur 48. Les conditions thermiques imposées par l'élément de la chaîne de traction électrique 39 permettent une surchauffe du fluide réfrigérant 47 qui est alors complètement en phase gazeuse. C'est dans cet état surchauffé que le fluide réfrigérant 47 rejoint le point de convergence 6.

Dans la troisième branche 25, le fluide réfrigérant 47, qui est à haute pression et à haute température, subit une détente opérée par le troisième organe de détente 28. Il traverse le troisième échangeur thermique 26 à basse pression et à basse température. Ce faisant, le fluide réfrigérant 47 réalise un échange thermique avec le flux d'air intérieur FA destiné à l'habitacle. En sortant du troisième échangeur thermique 26, le fluide réfrigérant 47 est sous forme diphasique. Au sein du dispositif d'accumulation 15, on opère une séparation de la phase liquide, et c'est essentiellement la phase gazeuse qui atteint le point de convergence 6.

Au point de convergence 6, le fluide réfrigérant 47 surchauffé issu de la deuxième branche 5 et le fluide réfrigérant 47 issu de la troisième branche 25 se mélangent avant de rejoindre le dispositif de compression 2 avec une surchauffe modérée où se termine un cycle thermodynamique.

Dans l'exemple de la figure 2, le fluide réfrigérant 47 circule dans toute la conduite principale 3, dans la deuxième branche 5 et dans la troisième branche 25. Il ne circule ni dans la première branche 4 du fait de la fermeture du premier organe de détente 16, ni dans la quatrième branche 30 du fait de la fermeture de la vanne d'arrêt 31, ni dans la cinquième branche 32 du fait de la fermeture de la valve d'arrêt 34. Le deuxième point de jonction 20 est un point où le fluide réfrigérant 47 se divise, tandis que le point de convergence 6 est un point où le fluide réfrigérant 47 converge.

Dans l'exemple de la figure 2, le liquide caloporteur 48 circule dans au moins le conduit principal 41 et dans le deuxième conduit 44, de sorte à refroidir l'élément 39 de la chaîne de traction électrique, par exemple le dispositif de stockage électrique 40.

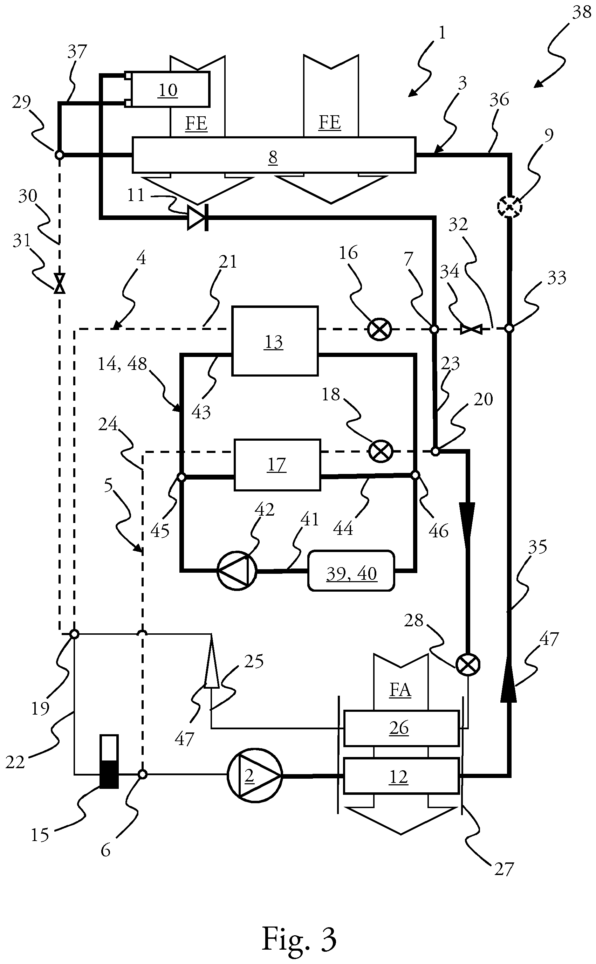

La figure 3 illustre le circuit 1 selon l'invention exploité exclusivement en mode climatisation, lors de la phase de roulage. Ce mode de fonctionnement permet de refroidir l'habitacle du véhicule grâce à la mise en œuvre du troisième échangeur thermique 26 de l'installation 27 de ventilation, de chauffage, et/ou de climatisation.

Les différences vont être décrites ci-après par rapport à ce qui a été décrit à la figure 2. A l'exception de ces différences, la description de la figure 2 s'applique *mutatis-mutandis* et on pourra s'y reporter pour mettre en œuvre l'invention décrite à la figure 3.

Dans l'exemple de la figure 3, le premier organe de détente 16 et le deuxième organe de détente 18 sont fermés. Dès lors, le fluide réfrigérant 47 ne circule pas dans le deuxième segment 24 de la deuxième branche 5. Au deuxième point de jonction 20, il n'emprunte que la troisième branche 25. Le point de convergence 6 ne reçoit pas de fluide réfrigérant 47 surchauffé en provenance de la deuxième branche 5.

Dans l'exemple de la figure 3, le fluide réfrigérant 47 circule dans toute la conduite principale 3, dans le premier segment 23 deuxième branche 5 et dans la troisième branche 25. Il ne circule ni dans la première branche 4 du fait de la fermeture du premier organe de détente 16, ni dans le deuxième segment 24 de la deuxième branche 5 du fait de la fermeture du deuxième organe de détente 18, ni dans la quatrième branche 30 du fait de la fermeture de la vanne d'arrêt 31, ni dans la cinquième branche 32 du fait de la fermeture de la valve d'arrêt 34.

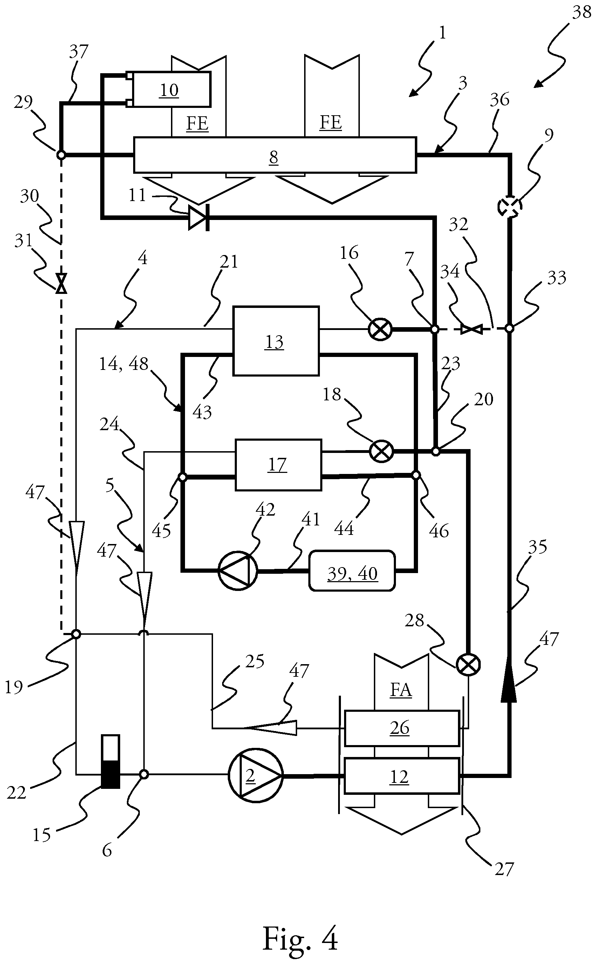

La figure 4 illustre le circuit 1 selon l'invention exploité en mode climatisation et mettant en œuvre le traitement thermique du dispositif de stockage électrique 40 lors d'une charge rapide dudit dispositif de stockage électrique 40. Ce mode de fonctionnement est par exemple utilisé lorsque les occupants restent dans le véhicule en charge et à l'arrêt. Ce mode de fonctionnement permet un refroidissement simultané de l'habitacle du véhicule et du dispositif de stockage électrique 40, ce dernier ayant un besoin en refroidissement accru par rapport à la phase de roulage. Le chauffage de l'habitacle et réalisé par le cinquième échangeur thermique 12. Le refroidissement du dispositif de stockage électrique 40 est réalisé par le premier échangeur thermique 13 et le deuxième échangeur thermique 17. Le point de convergence 6 reçoit un mélange de fluide réfrigérant 47 surchauffé et nonsurchauffé.

Dans l'exemple de la figure 4, le fluide réfrigérant 47 circule comme décrit dans la figure 2 excepté pour la première branche 4. La circulation dans la première branche 4 va être décrite ci-après. Pour les autres branches et pour la conduite principale 3, on pourra se reporter à la description faite pour la figure 2 qui s'applique *mutatis-mutandis.*

Dans la première branche 4, le fluide réfrigérant 47 circule et subit une détente opérée par le premier organe de détente 16. Puis, ainsi amené à basse température et basse pression, il réalise un échange thermique au sein du premier échangeur thermique 13, simultanément traversé par le liquide caloporteur 48. Dans la deuxième branche 5, le fluide réfrigérant 47 circule tel que décrit pour la figure 2. Ainsi, le dispositif de stockage électrique 40 est refroidi par traitement thermique conjoint du premier échangeur thermique 13 et du deuxième échangeur thermique 17 afin de répondre à son besoin en refroidissement accru.

Le fluide réfrigérant 47 issu de la première branche 4 et de la troisième branche 25 se rejoint au premier point de jonction 19 avant d'intégrer le dispositif d'accumulation 15. Passé ce dispositif d'accumulation 15, le fluide réfrigérant 47 à l'état gazeux se mélange au fluide réfrigérant 47 surchauffé, issu de la deuxième branche 5 qui a été vaporisé dans le deuxième échangeur thermique 17.

Dans l'exemple de la figure 4, le liquide caloporteur 48 circule dans l'ensemble de la boucle 14 de liquide caloporteur 48 pour refroidir le dispositif de stockage électrique 40 grâce au fonctionnement simultané du premier échangeur thermique 13 et du deuxième échangeur thermique 17.

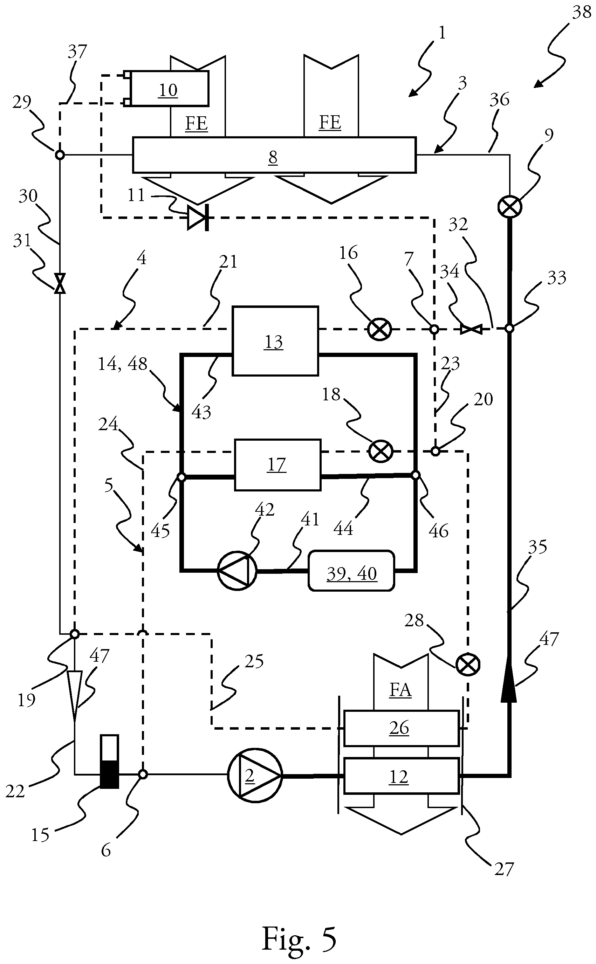

La figure 5 illustre le circuit 1 selon l'invention exploité en mode chauffage de l'habitacle en phase de roulage.

Dans l'exemple de la figure 5, le dispositif de compression 2 impose dans la conduite principale 3 une haute pression et une haute température au fluide réfrigérant 47. C'est dans cet état que le fluide réfrigérant 47 traverse le cinquième échangeur thermique 12. Le fluide réfrigérant 47 échange avec le flux d'air intérieur FA en traversant le cinquième échangeur thermique 12. Ce dernier est alors utilisé en tant que condenseur du fluide réfrigérant 47. Ce faisant, le flux d'air intérieur FA est chauffé et chauffe l'habitacle du véhicule.

Le fluide réfrigérant 47 passe le quatrième point de jonction 33 pour intégrer la deuxième portion 36 de la conduite principale 3 et la cinquième branche 32, la valve d'arrêt 34 étant fermée.

Dans la deuxième portion 36 de la conduite principale 3, l'organe de détente principal 9 opère une détente du fluide réfrigérant 47, qui passe de la haute pression et haute température à la basse pression et basse température. L'échangeur thermique principal 8 fonctionnant en évaporateur permet au fluide réfrigérant 47 de récupérer des calories issues du flux d'air extérieur FE.

Au troisième point de jonction 29, le fluide réfrigérant 47 traverse la quatrième branche 30 jusqu'au premier point de jonction 19, la vanne d'arrêt 31 étant ouverte. Le fluide réfrigérant 47 est en effet aspiré par le dispositif de compression 2 en aval. Ainsi, le fluide réfrigérant 47 n'emprunte pas la troisième portion 37 de la conduite principale 3. Le fluide réfrigérant 47 rejoint le dispositif de compression 2 via le dispositif d'accumulation 15.

Dans l'exemple de la figure 5, le fluide réfrigérant 47 circule dans la première portion 35 et la deuxième portion 36 de la conduite principale 3, dans la quatrième branche 30, dans la deuxième partie 22 de la première branche 4. Il ne circule ni dans la troisième portion 37 de la conduite principale 3, ni dans la première branche 4 du fait de la fermeture du premier organe de détente 16, ni dans la deuxième branche 5 du fait de la fermeture du deuxième organe de détente 18, ni dans la troisième branche 25 du fait de la fermeture du troisième organe de détente 28, ni dans la cinquième branche 32 du fait de la fermeture de la valve d'arrêt 34.

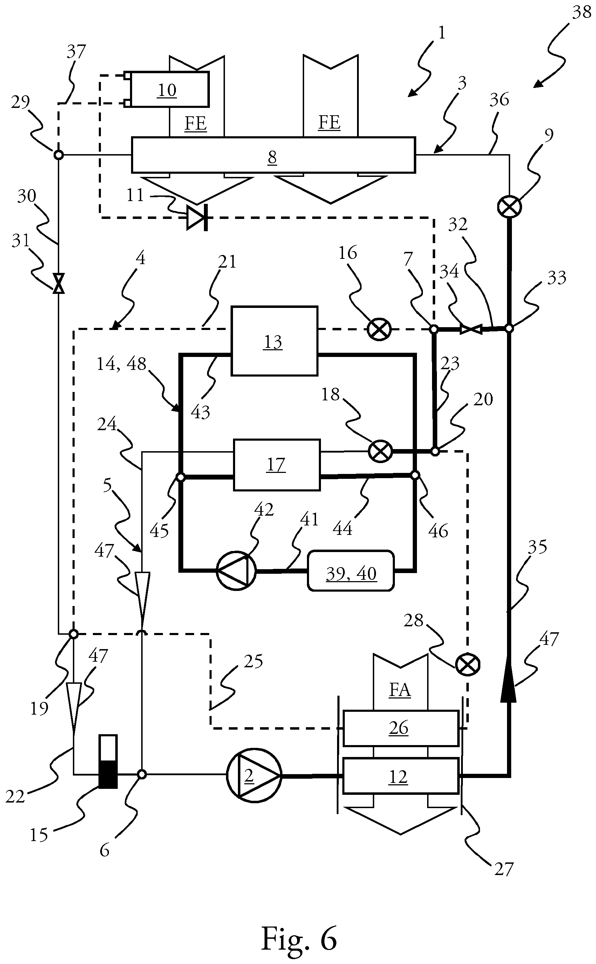

La figure 6 illustre le circuit 1 selon l'invention exploité en mode chauffage de l'habitacle et en mode refroidissement de l'élément 39 de la chaîne de traction électrique, lors de la phase de roulage. Ce mode de fonctionnement permet ainsi simultanément un chauffage de l'habitacle du véhicule et un refroidissement du dispositif de stockage électrique 40. Le chauffage de l'habitacle et réalisé par le cinquième échangeur thermique 12, selon le mode de réalisation décrit à la figure 5. Le refroidissement du dispositif de stockage électrique 40 est réalisé par le deuxième échangeur thermique 17, selon le mode de réalisation décrit à la figure 2. Le point de convergence 6 reçoit un mélange de fluide réfrigérant 47 surchauffé et nonsurchauffé.

Les différences vont être décrites ci-après par rapport à ce qui a été présenté pour la figure 5. A l'exception de ces différences, la description de la figure 5 s'applique *mutatis-mutandis* et on pourra s'y reporter pour mettre en œuvre l'invention selon la figure 6.

Au quatrième point de jonction 33, le fluide réfrigérant 47 emprunte la cinquième branche 32, la valve d'arrêt 34 étant ouverte. Puis, il circule dans la deuxième branche 5 comme décrit dans la figure 4 et on pourra s'y reporter pour mettre en œuvre l'invention décrite à la figure 6.

Dans l'exemple de la figure 6, le fluide réfrigérant 47 circule dans la première portion 35 et la deuxième portion 36 de la conduite principale 3, dans la quatrième branche 30, dans la deuxième partie 22 de la première branche 4, dans la cinquième branche 32 et dans la deuxième branche 5. Il ne circule ni dans la troisième portion 37 de la première branche 4, ni dans la première branche 4 du fait de la fermeture du premier organe de détente 16, ni dans la troisième branche 25 du fait de la fermeture du troisième organe de détente 28. Le quatrième point de jonction 33 est un point où le fluide réfrigérant 47 se divise et le point de convergence 6 est un point où fluide réfrigérant 47 converge.

Dans l'exemple de la figure 6, le liquide caloporteur 48 circule dans au moins le conduit principal 41 et dans le deuxième conduit 44, de sorte à réaliser l'échange de chaleur entre le fluide réfrigérant 47 et le liquide caloporteur 48.

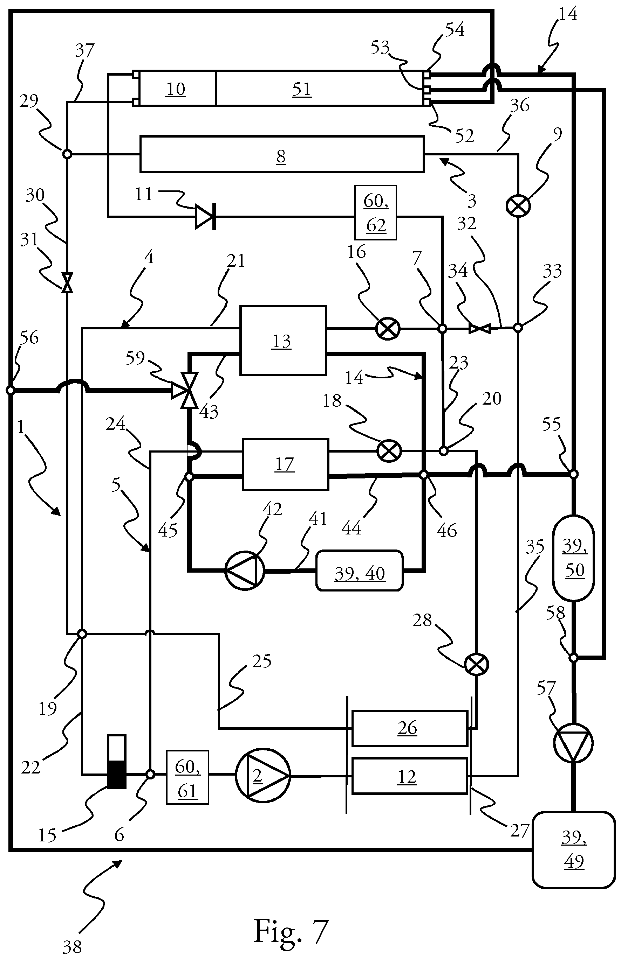

La figure 7 présente un deuxième mode de réalisation du système 38 de traitement thermique incluant le circuit 1 selon l'invention. Les différences vont être décrites ci-après par rapport à ce qui a été présenté pour la figure 1. A l'exception de ces différences, la description de la figure 1 s'applique *mutatis-mutandis* et on pourra s'y reporter pour mettre en œuvre l'invention selon la figure 7. Les différences sont trouvées dans le circuit 1 selon l'invention et dans la boucle 14 de liquide caloporteur 48. Cependant, l'une ou l'autre de ces différences peut être retrouvée dans d'autres modes de réalisation de façon dissociées.

Dans l'exemple de la figure 7, le circuit 1 selon l'invention comprend un échangeur de chaleur interne 60 à deux passes 61, 62.

Une passe basse pression 61 est disposée préférentiellement dans la conduite principale 3, entre le point de convergence 6 et le dispositif de compression 2. Alternativement, la passe basse pression 61 est disposée entre le dispositif d'accumulation 15 et le point de convergence 6.

Une passe haute pression 62 est disposée dans la conduite principale 3, entre l'unité de sous-refroidissement 10 et le point de convergence 7, plus particulièrement entre le clapet anti-retour 11 et le point de divergence 7.

La passe basse pression 61 et la passe haute pression 62 sont représentées dans la figure 7 sans lien apparent pour faciliter la lecture de la figure 7. Cependant, il faut comprendre que la passe basse pression 61 et la passe haute pression 62 font parties d'un même échangeur de chaleur interne 60, de sorte à ce qu'un échange thermique entre le fluide réfrigérant basse pression qui circule dans la passe basse pression 61 et le fluide réfrigérant haute pression qui circule dans la passe haute pression 62 puisse se produire.

Dans l'exemple de la figure 7, le premier échangeur thermique 13 et le deuxième échangeur thermique 17 sont affectés au traitement thermique du même élément 39 de la chaîne de traction électrique du véhicule, à savoir le dispositif de stockage électrique 40. La boucle 14 de liquide caloporteur 48 illustrée à la figure 7 permet de traiter thermiquement deux autres éléments 39 de la chaîne de traction électrique du véhicule, à savoir un moteur électrique 49 et une unité électronique 50 de contrôle de ce moteur électrique 49. En complément du refroidissement pouvant être dispensé par le premier échangeur thermique 13 et le deuxième échangeur thermique 17, le dispositif de stockage électrique 40 bénéficie d'un refroidissement additionnel, réalisé par un radiateur 51 disposé en face avant du véhicule, conjointement à l'unité de sous-refroidissement 10. Le radiateur 51 est configuré pour être traversé par le flux d'air extérieur FE au véhicule. Par rapport à ce flux d'air extérieur FE, le radiateur 51 est amont à l'échangeur thermique principal 8.

Le radiateur 51 est apte à générer deux niveaux de température du liquide caloporteur en son sein. Le radiateur 51 comprend pour ce faire une entrée 52, une première sortie 53 et une deuxième sortie 54 en parallèles l'une et l'autre. La première sortie 53 est apte à dispenser le liquide caloporteur à un premier niveau de température et la deuxième sortie 54 est apte à dispenser le liquide caloporteur à un deuxième niveau de température différent du premier niveau de température. La première sortie 53 est apte à alimenter le moteur électrique 49, bénéficiant du premier niveau de température. La deuxième sortie 54 est apte à alimenter le dispositif de stockage électrique 40 et l'unité électronique 50, bénéficiant du deuxième niveau de température.

La boucle 14 de liquide caloporteur 48 comporte un troisième point de raccordement 55 et un quatrième point de raccordement 56. Le troisième point de raccordement 55 est un point ayant vocation à diviser le liquide caloporteur 48 pour qu'il se dirige d'une part vers le deuxième point de raccordement 46 et d'autre part en direction de l'unité électronique 50. Le quatrième point de raccordement 56 est un point ayant vocation à faire converger le liquide caloporteur 48 en provenance du premier point de raccordement 45 d'une part, et du moteur électrique 49, d'autre part.

Pour mettre en circulation le liquide caloporteur 48 issu de la première sortie 53 du radiateur 51, la boucle 14 de liquide caloporteur 48 dispose d'un moyen additionnel de mise en mouvement 57 du liquide caloporteur. Le moyen additionnel de mise en mouvement 57 est disposé entre la première sortie 53 et le moteur électrique 49. Il s'agit par exemple d'une pompe.

Entre la première sortie 53 du radiateur 51 et le moyen additionnel de mise en mouvement 57 du liquide caloporteur, un cinquième point de raccordement 58 est disposé. Le cinquième point de raccordement 58 est une zone de convergence apte à faire converger le liquide caloporteur 48 issu de la première sortie 53 et celui issu de l'unité électronique 50.

Le premier conduit 43 comporte une vanne trois voies 59. La vanne trois voies 49 est un point où le liquide caloporteur 48 peut diverger. Le liquide caloporteur 49 est mis en circulation par le moyen de mise en circulation 42 qui impose le sens de circulation du liquide caloporteur 49. Notamment, le premier échangeur thermique 13 et le deuxième échangeur thermique 17 sont disposés en amont du dispositif de stockage électrique 40, du point de vue du liquide caloporteur 49. Ainsi, du fait du sens de circulation imposé par le dispositif de mise en circulation 42 de liquide caloporteur 49, le liquide caloporteur 49 issu du premier point de raccordement 45 est apte à alimenter la vanne trois voies 59, elle-même apte à distribuer le liquide caloporteur 48 d'une part vers le premier échangeur thermique 13, d'autre part vers le quatrième point de raccordement 56. La vanne trois voies 59 dispose de fonction d'arrêt apte à interdire et autoriser l'une et/ou l'autre de ces distributions.

On comprend de ce qui précède que la présente invention permet ainsi d'assurer simplement, sans excès de consommation et à un niveau sonore réduit, le refroidissement d'un élément d'une chaîne de traction électrique d'un véhicule, tel qu'un dispositif de stockage électrique configuré pour fournir une énergie électrique à un moteur électrique d'entraînement du véhicule, ainsi que le traitement thermique d'un habitacle par refroidissement d'un flux d'air intérieur envoyé dans l'habitacle. Le coefficient de performance du circuit est ainsi amélioré, en particulier pendant le mode de charge rapide simultanément au refroidissement de l'habitacle du véhicule.

L'invention ne saurait toutefois se limiter aux moyens et configurations décrits et illustrés ici, et elle s'étend également à tous moyens ou configurations équivalentes et à toute combinaison techniquement opérant de tels moyens. En particulier, l'architecture du circuit de fluide réfrigérant peut être modifiée sans nuire à l'invention dans la mesure où il remplit *in fine* les fonctionnalités décrites dans le présent document.

## Revendications

1. Circuit (1) de fluide réfrigérant (47) d'un véhicule, le circuit (1) comprenant au moins une conduite principale (3), une première branche (4), une deuxième branche (5) et une troisième branche (25) toutes trois en série de la conduite principale (3), la conduite principale (3) comprenant au moins un dispositif de compression (2) du fluide réfrigérant (47) et un échangeur thermique principal (8) agencée pour être traversé par un flux d'air extérieur (FE) à un habitacle du véhicule, la première branche (4) comprenant au moins un premier échangeur thermique (13) couplé thermiquement à une boucle (14) de liquide caloporteur (48) , la deuxième branche (5) comprenant au moins un deuxième échangeur thermique (17) couplé thermiquement à la boucle (14) de liquide caloporteur (48), la troisième branche (25) comprenant au moins un troisième échangeur thermique (26) agencé pour être traversé par un flux d'air intérieur (FA) envoyé dans l'habitacle du véhicule, ladite première branche (4) et la deuxième branche (5) étant en parallèle, le circuit étant **caractérisé en ce que** ladite première branche (4) comprend un dispositif d'accumulation (15) du fluide réfrigérant (47), **en ce que** la première branche (4) et la deuxième branche (5) se joignent en un point de convergence (6) disposé entre le dispositif d'accumulation (15) et le dispositif de compression (2), et **en ce que** la première branche (4) et la troisième branche (25) se joignent en un premier point de jonction (19) disposé entre le premier échangeur thermique (13) et le dispositif d'accumulation (15).

2. Circuit (1) selon la revendication 1, dans lequel la conduite principale (3) s'étend entre le point de convergence (6) et un point de divergence (7), le point de divergence (7) étant un point à partir duquel la première branche (4) et la deuxième branche (5) se séparent.

3. Circuit (1) selon la revendication précédente, dans lequel la conduite principale (3) comprend une unité de sous-refroidissement (10) disposée entre l'échangeur thermique principal (8) et le point de divergence (7).

4. Circuit (1) selon la revendication précédente, l'unité de sous-refroidissement (10) est un quatrième échangeur thermique, agencé pour être traversé par le flux d'air extérieur (FE) à l'habitacle du véhicule et installé pour être traversé par le flux d'air extérieur (FE) avant que ce dernier ne traverse l'échangeur thermique principal (8).

5. Circuit (1) selon l'une quelconque des revendications précédentes, dans lequel la première branche (4) comprend le premier point de jonction (19) et la deuxième branche (5) comporte un deuxième point de jonction (20), la troisième branche (25) du circuit (1) s'étendant entre le premier point de jonction (19) et le deuxième point de jonction (20).

6. Circuit (1) selon la revendication 5, dans lequel la conduite principale (3) comprend un cinquième échangeur thermique (12) disposé entre le dispositif de compression (2) et l'échangeur thermique principal (8), le cinquième échangeur thermique (12) étant agencé pour être traversé par le flux d'air intérieur (FA) envoyé dans l'habitacle du véhicule.

7. Circuit (1) selon les revendications 2 et 5, dans lequel la conduite principale (3) comporte un troisième point de jonction (29) disposé entre l'échangeur thermique principal (8) et le point de divergence (7), une quatrième branche (30) s'étendant entre le troisième point de jonction (29) et le premier point de jonction (19), la quatrième branche (30) comprenant au moins une vanne d'arrêt (31).

8. Circuit (1) selon l'une quelconque des revendications 2 à 7, comprenant une cinquième branche (32) qui raccorde la conduite principale (3) au point de divergence (7), la cinquième branche (32) comprenant au moins une valve d'arrêt (34).

9. Circuit (1) selon l'une quelconque des revendications précédentes, dans lequel le premier échangeur thermique (13) est configuré pour produire une puissance thermique supérieure à celle du deuxième échangeur thermique (17).

10. Circuit (1) selon l'une quelconque des revendications précédentes en combinaison avec la revendication 3, comprenant un échangeur de chaleur interne (60) à deux passes (61, 62), une passe basse pression (61) étant disposée dans la conduite principale (3) entre le point de convergence (6) et le dispositif de compression (2) et une passe haute pression (62) étant disposée dans la conduite principale (3), entre l'unité de sous-refroidissement (10) et le point de divergence (7).

11. Circuit (1) selon l'une quelconque des revendications précédentes en combinaison avec la revendication 3, comprenant un échangeur de chaleur interne (60) à deux passes (61, 62), la passe basse pression (61) étant disposée entre le dispositif d'accumulation (15) et le point de convergence (6) et une passe haute pression (62) étant disposée dans la conduite principale (3), entre l'unité de sous-refroidissement (10) et le point de divergence (7).

12. Système (38) de traitement thermique d'un véhicule comprenant le circuit (1) de fluide réfrigérant (47) selon l'une quelconque des revendications précédentes et une boucle (14) de liquide caloporteur (48) couplée thermiquement au circuit (1) de fluide réfrigérant (47) par l'intermédiaire du premier échangeur thermique (13) et du deuxième échangeur thermique (17), le premier échangeur thermique (13) et le deuxième échangeur thermique (17) étant affectés au traitement thermique d'au moins un même élément (39) d'une chaîne de traction électrique du véhicule.

## Patentansprüche

1. Kreislauf (1) für ein Kühlmittel (47) eines Fahrzeugs, wobei der Kreislauf (1) mindestens eine Hauptleitung (3), einen ersten Zweig (4), einen zweiten Zweig (5) und einen dritten Zweig (25), die sich alle drei mit der Hauptleitung (3) in Reihe befinden, beinhaltet, wobei die Hauptleitung (3) mindestens eine Vorrichtung zur Verdichtung (2) des Kühlmittels (47) und einen Hauptwärmetauscher (8), der dazu eingerichtet ist, von einem Luftstrom von außerhalb (FE) einer Fahrgastzelle des Fahrzeuges durchquert zu werden, beinhaltet, wobei der erste Zweig (4) mindestens einen ersten Wärmetauscher (13) beinhaltet, der mit einer Schleife (14) für eine Wärmeträgerflüssigkeit (48) thermisch gekoppelt ist, wobei der zweite Zweig (5) mindestens einen zweiten Wärmetauscher (17) beinhaltet, der mit der Schleife (14) für eine Wärmeträgerflüssigkeit (48) thermisch gekoppelt ist, wobei der dritte Zweig (25) mindestens einen dritten Wärmetauscher (26) beinhaltet, der dazu eingerichtet ist, von einem Innenluftstrom (FA), der in die Fahrgastzelle des Fahrzeugs eingeleitet wird, durchquert zu werden, wobei der erste Zweig (4) und der zweite Zweig (5) parallel sind, wobei der Kreislauf **dadurch gekennzeichnet ist, dass** der erste Zweig (4) eine Vorrichtung zur Speicherung (15) des Kühlmittels (47) beinhaltet, dass sich der erste Zweig (4) und der zweite Zweig (5) an einem Konvergenzpunkt (6), der zwischen der Speicherungsvorrichtung (15) und der Verdichtungsvorrichtung (2) angeordnet ist, treffen und dass sich der erste Zweig (4) und der dritte Zweig (25) an einem ersten Verbindungspunkt (19), der zwischen dem ersten Wärmetauscher (13) und der Speicherungsvorrichtung (15) angeordnet ist, treffen.

2. Kreislauf (1) nach Anspruch 1, wobei sich die Hauptleitung (3) zwischen dem Konvergenzpunkt (6) und einem Divergenzpunkt (7) erstreckt, wobei der Divergenzpunkt (7) ein Punkt ist, an dem sich der erste Zweig (4) und der zweite Zweig (5) voneinander trennen.

3. Kreislauf (1) nach dem vorhergehenden Anspruch, wobei die Hauptleitung (3) eine Unterkühlungseinheit (10) beinhaltet, die zwischen dem Hauptwärmetauscher (8) und dem Divergenzpunkt (7) angeordnet ist.

4. Kreislauf (1) nach dem vorhergehenden Anspruch, wobei die Unterkühlungseinheit (10) ein vierter Wärmetauscher ist, der dazu eingerichtet ist, von dem Luftstrom von außerhalb (FE) der Fahrgastzelle des Fahrzeugs durchquert zu werden, und dazu installiert ist, von dem Luftstrom von außerhalb (FE) durchquert zu werden, bevor dieser den Hauptwärmetauscher (8) durchquert.

5. Kreislauf (1) nach einem beliebigen der vorhergehenden Ansprüche, wobei der erste Zweig (4) den ersten Verbindungspunkt (19) beinhaltet und der zweite Zweig (5) einen zweiten Verbindungspunkt (20) umfasst, wobei sich der dritte Zweig (25) des Kreislaufs (1) zwischen dem ersten Verbindungspunkt (19) und dem zweiten Verbindungspunkt (20) erstreckt.

6. Kreislauf (1) nach Anspruch 5, wobei die Hauptleitung (3) einen fünften Wärmetauscher (12) beinhaltet, der zwischen der Verdichtungsvorrichtung (2) und dem Hauptwärmetauscher (8) angeordnet ist, wobei der fünfte Wärmetauscher (12) dazu eingerichtet ist, von dem Innenluftstrom (FA), der in die Fahrgastzelle des Fahrzeugs eingeleitet wird, durchquert zu werden.

7. Kreislauf (1) nach den Ansprüchen 2 und 5, wobei die Hauptleitung (3) einen dritten Verbindungspunkt (29) umfasst, der zwischen dem Hauptwärmetauscher (8) und dem Divergenzpunkt (7) angeordnet ist, wobei sich ein vierter Zweig (30) zwischen dem dritten Verbindungspunkt (29) und dem ersten Verbindungspunkt (19) erstreckt, wobei der vierte Zweig (30) mindestens ein Absperrventil (31) beinhaltet.

8. Kreislauf (1) nach einem beliebigen der Ansprüche 2 bis 7, der einen fünften Zweig (32) beinhaltet, der die Hauptleitung (3) mit dem Divergenzpunkt (7) verbindet, wobei der fünfte Zweig (32) mindestens ein Sperrventil (34) beinhaltet.

9. Kreislauf (1) nach einem beliebigen der vorhergehenden Ansprüche, wobei der erste Wärmetauscher (13) dazu konfiguriert ist, eine Wärmeleistung zu erzeugen, die größer als diejenige des zweiten Wärmetauschers (17) ist.

10. Kreislauf (1) nach einem beliebigen der vorhergehenden Ansprüche in Kombination mit Anspruch 3, der einen internen Wärmetauscher (60) mit zwei Wegen (61, 62) beinhaltet, wobei ein Niederdruckweg (61) in der Hauptleitung (3) zwischen dem Konvergenzpunkt (6) und der Verdichtungsvorrichtung (2) angeordnet ist und ein Hochdruckweg (62) in der Hauptleitung (3) zwischen der Unterkühlungseinheit (10) und dem Divergenzpunkt (7) angeordnet ist.

11. Kreislauf (1) nach einem beliebigen der vorhergehenden Ansprüche in Kombination mit Anspruch 3, der einen internen Wärmetauscher (60) mit zwei Wegen (61, 62) beinhaltet, wobei der Niederdruckweg (61) zwischen der Speicherungsvorrichtung (15) und dem Konvergenzpunkt (6) angeordnet ist und ein Hochdruckweg (62) in der Hauptleitung (3) zwischen der Unterkühlungseinheit (10) und dem Divergenzpunkt (7) angeordnet ist.

12. System (38) zur Wärmebehandlung eines Fahrzeugs, beinhaltend den Kreislauf (1) für ein Kühlmittel (47) nach einem beliebigen der vorhergehenden Ansprüche und eine Schleife (14) für eine Wärmeträgerflüssigkeit (48), die über den ersten Wärmetauscher (13) und den zweiten Wärmetauscher (17) mit dem Kreislauf (1) für das Kühlmittel (47) thermisch gekoppelt ist, wobei der erste Wärmetauscher (13) und der zweite Wärmetauscher (17) zur Wärmebehandlung mindestens eines gleichen Elements (39) eines elektrischen Antriebsstrangs des Fahrzeugs dienen.

## Claims

1. Circuit (1) for a refrigerant fluid (47) for a vehicle, the circuit (1) comprising at least a main pipe (3), a first leg (4), a second leg (5) and a third leg (25) all three of them in series with the main pipe (3), the main pipe (3) comprising at least a compression device (2) for compressing the refrigerant fluid (47) and a main heat exchanger (8) designed to have passing through it a flow of exterior air (FE) external to an interior of the vehicle, the first leg (4) comprising at least a first heat exchanger (13) thermally coupled to a loop (14) for heat transport liquid (48), the second leg (5) comprising at least a second heat exchanger (17) thermally coupled to the loop (14) for heat transport liquid (48), the third leg (25) comprising at least a third heat exchanger (26) designed to have passing through it a flow of interior air (FA) sent into the vehicle interior, said first leg (4) and the second leg (5) being in parallel, the circuit being **characterized in that** said first leg (4) comprises an accumulator device (15) for accumulating refrigerant fluid (47), **in that** the first leg (4) and the second leg (5) meet at a point of convergence (6) positioned between the accumulator device (15) and the compression device (2), and **in that** the first leg (4) and the third leg (25) meet at a first junction point (19) positioned between the first heat exchanger (13) and the accumulator device (15).

2. Circuit (1) according to Claim 1, wherein the main pipe (3) extends between the point of convergence (6) and a point of divergence (7), the point of divergence (7) being a point beyond which the first leg (4) and the second leg (5) separate from one another.

3. Circuit (1) according to the preceding claim, wherein the main pipe (3) comprises a supercooling unit (10) positioned between the main heat exchanger (8) and the point of divergence (7).

4. Circuit (1) according to the preceding claim, the supercooling unit (10) being a fourth heat exchanger designed to have passing through it the flow of exterior air (FE) external to the interior of the vehicle and installed in such a way that the flow of exterior air (FE) passes through it before passing through the main heat exchanger (8).

5. Circuit (1) according to any one of the preceding claims, wherein the first leg (4) comprises the first junction point (19) and the second leg (5) comprises a second junction point (20), the third leg (25) of the circuit (1) extending between the first junction point (19) and the second junction point (20).

6. Circuit (1) according to Claim 5, wherein the main pipe (3) comprises a fifth heat exchanger (12) positioned between the compression device (2) and the main heat exchanger (8), the fifth heat exchanger (12) being designed to have passing through it the flow of interior air (FA) sent into the vehicle interior.

7. Circuit (1) according to Claims 2 and 5, wherein the main pipe (3) comprises a third junction point (29) positioned between the main heat exchanger (8) and the point of divergence (7), a fourth leg (30) extending between the third junction point (29) and the first junction point (19), the fourth leg (30) comprising at least one shutoff valve (31).

8. Circuit (1) according to any one of Claims 2 to 7, comprising a fifth leg (32) which connects the main pipe (3) to the point of divergence (7), the fifth leg (32) comprising at least one shutoff valve (34).

9. Circuit (1) according to any one of the preceding claims, wherein the first heat exchanger (13) is configured to produce a thermal power greater than that of the second heat exchanger (17).

10. Circuit (1) according to any one of the preceding claims in combination with Claim 3, comprising an internal heat exchanger (60) having two passes (61, 62), a low-pressure pass (61) being arranged in the main pipe (3) between the point of convergence (6) and the compression device (2), and a high-pressure pass (62) being arranged in the main pipe (3), between the supercooling unit (10) and the point of divergence (7).

11. Circuit (1) according to any one of the preceding claims in combination with Claim 3, comprising an internal heat exchanger (60) having two passes (61, 62), the low-pressure pass (61) being positioned between the accumulator device (15) and the point of convergence (6), and a high-pressure pass (62) being positioned in the main pipe (3), between the supercooling unit (10) and the point of divergence (7) .

12. Thermal treatment system (38) for a vehicle comprising the circuit (1) for a refrigerant fluid (47) according to any one of the preceding claims and a loop (14) for heat transport liquid (48) thermally coupled to the circuit (1) for the refrigerant fluid (47) via the first heat exchanger (13) and the second heat exchanger (17), the first heat exchanger (13) and the second heat exchanger (17) being assigned to the thermal treatment of at least one same element (39) of an electric powertrain of the vehicle.
